# EUROPÄISCHE PATENTSCHRIFT

(11) **EP 1 581 541 B1**
(45) Veröffentlichungstag und Bekanntmachung des Hinweises auf die Patenterteilung: **17.02.2010**
(21) Anmeldenummer: 03795881.6
(22) Anmeldetag: 11.12.2003
(51) Int. Cl.: C07F 9/40

(54) **IMINOBIS(METHYLENPHOSPHONO)CARBONSÄUREPENTAALKYLESTER, DEREN HERSTELLUNG UND DEREN VERWENDUNG**
NOVEL IMINO BIS(METHYLENE PHOSPHONO)CARBOXYLIC ACID PENTAALKYL ESTERS, PRODUCTION AND USE OF THE SAME
PENTA-ALKYLESTERS DE L'ACIDE IMINO-BIS(METHYLENEPHOSPHONO)CARBOXYLIQUE, LEUR PRODUCTION ET LEUR UTILISATION

(30) Priorität: 20.12.2002 DE 10259937
(43) Veröffentlichungstag der Anmeldung: 05.10.2005
(73) Patentinhaber: Bayer Technology Services GmbH, 51368 Leverkusen (DE)
(72) Erfinder: KÖHLER, Burkhard, 51373 Leverkusen (DE); BOHMANN, Kerstin, 50677 Köln (DE); HOHEISEL, Werner, 51061 Köln (DE)
(86) Internationale Anmeldenummer: PCT/EP2003/014025
(87) Internationale Veröffentlichungsnummer: WO 2004/058780

(56) Entgegenhaltungen:
- EP-A- 0 672 673
- WO-A-02/20696
- WO-A-02/062398
- PRISHCHENKO A A ET AL: "Synthesis of esters of diphosphorus-susbtitiuted amino acids with tetra- and pentacoordinate phosphorus atoms" RUSSIAN JOURNAL OF GENERAL CHEMISTRY, Bd. 65, Nr. 10, 1995, Seiten 1606-7, XP001189445 ISSN: 1070-3632
- MOEDRITZER K ET AL: "The direct synthesis of alpha-aminomethylphosphonic acids. Mannich-type reactions with orthophosphorous acid" JOURNAL OF ORGANIC CHEMISTRY, Bd. 31, Mai 1966 (1966-05), Seiten 1603-1607, XP001094340 ISSN: 0022-3263 in der Anmeldung erwähnt

## Beschreibung

Die Erfindung betrifft neue Iminobis(methylenphosphono)carbonsäureester, erhältlich durch Reaktion der Iminobis(methylenphosphono)carbonsäuren mit Orthoameisensäuretrialkylestem.

Für die Synthese von nanoteiligen Metallsalzen, wie sie beispielsweise in WO 02/20696 beshrieben ist, werden komplexierende Lösungsmittel benötigt. Um esterfunktionelle Oberflächen der Nanoteilchen bereitzustellen, müssen diese komplexierenden Lösungsmittel Carboxylesterfunktionen enthalten.

Daher bestand die Aufgabe, Löungsmittel mit der komplexierenden Iminobis-(methylenphosphono)gruppe und Carboxylesterfunktionen bereitzustellen.

Die Umwandlung einer aliphatischen Aminogruppe in eine Iminobis(methylenphosphono)gruppe gering in an sich bekannter Weise durch die Umsetzung mit Formaldehyd und Phosphoriger Säure.(Mannich-Moedritzer Reaktion, Moedritzer und Irani, J. Org. Chem. 31 (1966) 1603). Die Iminobis(methylenphosphono)carbonsäuren sind dementsprechend aus Aminosäuren mit der Mannich-Moedritzer Reaktion zugänglich und dienen als Edukte für die erfindungsgemäßen neuen Iminobis(methylenphosphono)carbonsäurepentaalkylester.

Eine konventionelle Veresterung der Iminobis(methylenphosphono)carbonsäuren, durch Veresterung mit Alkoholen gelang nicht.

Es wurde nun gefunden, dass durch Umsetzung von Iminobis(methylenphosphono)-carbonsäuren mit Orthoameisensäureestem Iminobis(methylenphosphono)carbonsäurepentaalkylester zugänglich sind.

Gegenstand der Erfindung sind daher Iminobis(methylenphosphono)carbonsäurepentaalkylester der Formel I 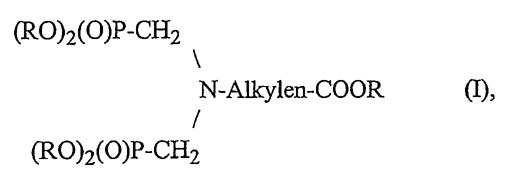 wobei
- R: einen C₁-C₄-Alkylrest bevorzugt einen Methyl-, Ethyl-, oder Isopropylrest und
- Alkylen: einen C₆-C₁₁-Alkylenrest oder C₇-C₂₀-Alkylenarylenrest, bevorzugt einen C₆-C₁₁-Alkylenrest, der linear oder verzweigt sein kann und zusätzlich als weitere Substituenten Halogenatome, COOR-Gruppen, Alkoxygruppen, Bis(dialkoxyphosphorylmethyl)aminogruppen oder Arylreste tragen kann, darstellt.

Ein weiterer Gegenstand der Erfindung ist ein Verfahren zur Herstellung der erfindungsgemäßen Iminobis(methylenphosphono)carbonsäurepentaalkylester, **dadurch gekennzeichnet, dass** man Verbindungen der Formel II 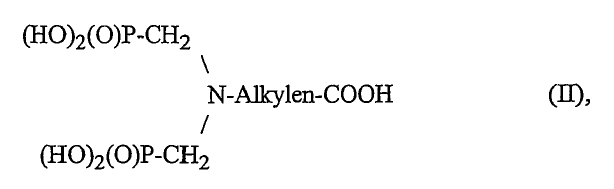 wobei Alkylen die oben angegebene Bedeutung hat,
mit Orthoestern der Formel III

(RO)₃C-x (III),

wobei
- R: die oben angegebene Bedeutung hat und
- X: für ein Wasserstoffatom, einen C₁-C₄-Alkylrest oder für einen Phenylrest, vorzugsweise für Wasserstoff, steht,
bei einer Temperatur von 60-200°C umsetzt.

Verbindungen der Formel II sind zugänglich durch Reaktion von Aminosäuren mit bezogen auf die Aminogruppe 2-3 Mol Formaldehyd und 2-3 Mol Phosphoriger Säure.

Als Aminosäuren können in dieser Reaktion eingesetzt werden:
Glycin, Alanin, Leucin, Glutaminsäure, Asparaginsäure, Lysin, Valin, Phenylalanin, beta-Alanin, 4-Aminobuttersäure, 6-Aminocapronsäure, 11-Aminoundecansäure, 7-Aminoheptansäure, 8-Aminooctansäure, 12-Aminododecansäure und 4-Aminomethylbenzoesäure, vorzugsweise 11-Aminoundecansäure und 6-Aminocapronsäure.

Als Verbindungen der Formel III können eingesetzt werden die Trimethyl-, Triethyl-, Tripropyl-, Triisopropyl- und Tributylester der Orthoameisensäure, der Orthoessigsäure und der Orthobenzoesäure, vorzugsweise Orthoameisensäure.

Die Reaktion findet bei 60°C bis 200°C statt. In einer bevorzugten Ausführungsform werden Orthoameisensäuretrialkylester bei ihrer Siedetemperatur eingesetzt. Die Reaktion findet in Gegenwart oder Abwesenheit, vorzugsweise in Abwesenheit von Lösungsmitteln statt. Es werden bevorzugt mindestens für jede Phosphorylgruppe im Edukt zwei Mol und für jede Carboxylgruppe ein Mol Orthoester eingesetzt. Nach der Reaktion werden nicht umgesetzte Edukte abfiltriert und der Überschuss an Orthoester abdestilliert. Die erfindungsgemäßen Iminobis(methylenphosphono)-carbonsäurepentaalkylester können meist nicht durch Vakuumdestillation gereinigt werden, fallen aber in für die geplante Verwendung ausreichender Reinheit an. Eine Reinigung kann durch chromatographische Methoden erfolgen.

Die erfindungsgemäßen Iminobis(methylenphosphono)carbonsäurepentaalkylester können vorteilhaft als Lösungsmittel bzw. Hilfsmittel für die Herstellung von nanoteiligen Metallsalzen eingesetzt werden, wobei z.B. ein Metallhalogenid mit einer Säure, z.B. Phosphorsäure oder Borsäure, umgesetzt wird. Die so hergestellten Nanoteilchen zeichnen sich durch eine geringe Teilchengröße und durch eine gezielte Oberflächenfunktionalisierung durch Estergruppen aus. Der durchschnittliche Durchmesser solcher Nanoteilchen beträgt 1 bis 100 nm.

Derartige Nanoteilchen finden Verwendung in Lacken oder Kunststoffen als Pigment oder Füllstoff, sowie in der medizinischen Diagnostik.

### Beispiele

### Beispiel 1 (Herstellung von Iminobis(methylenphosphono)undecansäure) (nicht erfindungsgemäß)

Man mischt 200 g 11-Aminoundecansäure, 170 g Phosphorige Säure, 200 ml Wasser und 200 ml konzentrierte Salzsäure, erhitzt auf 100°C und gibt innerhalb von 1 h 324 g Formalin (37 %) hinzu. Man rührt noch 1 h bei 100°C, lässt auf Raumtemperatur abkühlen und saugt das ausgefallene Produkt ab. Man erhält 460 g Produkt.

### Beispiel 2 (Herstellung von Iminobis(methylenphosphono)capronsäure) (nicht erfindungsgemäß)

Man mischt 131 g 6-Aminocapronsäure, 170 g Phosphorige Säure, 200 ml Wasser und 200 ml konzentrierte Salzsäure, erhitzt auf 100°C und gibt innerhalb von 1 h 324 g Formalin (37 %) hinzu. Man rührt noch 1 h bei 100°C und destilliert das Wasser im Vakuum ab. Man erhält 240 g Produkt.

### Beispiel 3 (Herstellung von Iminobis(methylenphosphono)undecansäure-pentaethylester) (erfindungsgemäß)

Man erhitzt 100 g des Produktes aus Beispiel 1 mit 1000 g Orthoameisensäuretriethylester 14 h auf Rückfluss. Man filtriert das nicht umgesetzte Edukt ab und destilliert alle bis 140°C bei 5 Torr flüchtigen Bestandteile ab.

Man erhält 65 g Produkt (Charakterisierung durch ¹H-NMR-Spektroskopie).

### Beispiel 4 (Herstellung von Iminobis(methylenphosphono)capronsäure pentaethylester) (erfindungsgemäß)

Man erhitzt 200 g des Produktes aus Beispiel 2 mit 2000 g Orthoameisensäuretriethylester 13,5 h auf Rückfluss.

Man filtriert das nicht umgesetzte Edukt an und destilliert alle bis 140°C bei 5 Torr flüchtigen Bestandteile ab.

Man erhält 148 g Produkt (Charakterisierung durch ¹H-NMR-Spektroskopie).

## Patentansprüche

1. Iminobis(methylenphosphono)carbonsäurepentaalkylester der Formel I 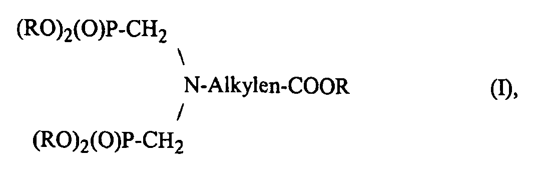 wobei
R einen C₁-C₄-Alkylrest und
Alkylen einen C₆-C₁₁-Alkylenrest oder C₇-C₂₀-Alkylenarylenrest, der linear oder verzweigt sein kann und zusätzlich als weitere Substituenten Halogenatome, COOR-Gruppen, Alkoxygruppen, Bis(dialkoxy- phosphorylmethyl)aminogruppen oder Arylreste tragen kann, darstellt.

2. Iminobis(methylenphosphono)carbonsäurepentaalkylester nach Anspruch 1, wobei Alkylen für einen C₆-C₁₁-Alkylenrest und für R einen Methyl-, Ethyl- oder Isopropylrest steht.

3. Verfahren zur Herstellung der Iminobis(methylenphosphono)carbonsäurepentaalkylester nach Anspruch 1, **dadurch gekennzeichnet, dass** man Verbindungen der Formel II 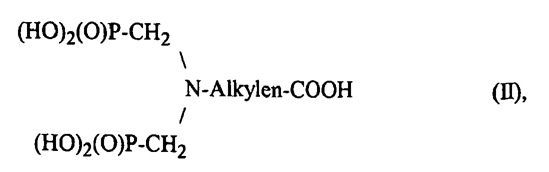 wobei Alkylen für einen C₆-C₁₁-Alkylenrest oder C₇-C₂₀-Alkylenarylenrest, der linear oder verzweigt sein kann und zusätzlich als weitere Substituenten Halogenatome, COOR-Gruppen, Alkoxygruppen, Bis(dialkoxyphosphorylmethyl)aminogruppen oder Arylreste tragen kann, steht,
mit Orthoestern der Formel III
(RO)₃C-X (III),
wobei
R für einen C₁-C₄-Alkylrest steht und
X für ein Wasserstoffatom, einen C₁-C₄-Alkylrest oder für einen Phenyl- rest, vorzugsweise für Wasserstoff, steht,
bei einer Temperatur von 60°C bis 200°C umsetzt.

4. Verwendung der Iminobis(methylenphosphono)carbonsäurepentaalkylester nach Anspruch 1 oder 2 als Lösungsmittel oder Hilfsmittel für die Herstellung nanoteiliger Metallsalze.

## Claims

1. Iminobis(methylenephosphono)carboxylic acid pentaalkyl esters of the formula I 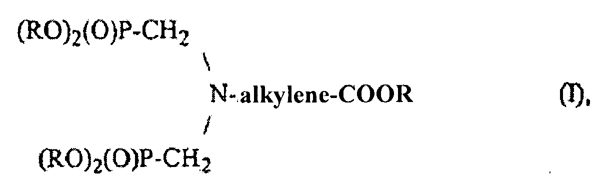 wherein
R represents a C₁-C₄-alkyl radical and
alkylene represents a C₆-C₁₁-alkylene radical or C₇-C₂₀- alkylenearylene radical, which can be linear or branched and can additionally carry halogen atoms, COOR groups, alkoxy groups, bis(dialkoxyphosphorylmethyl)amino groups or aryl radicals as further substituents.

2. Iminobis(methylenephosphono)carboxylic acid pentaalkyl esters according to claim 1, wherein alkylene represents a C₆-C₁₁-alkylene radical and R represents a methyl, ethyl or isopropyl radical.

3. Process for the preparation of the iminobis(methylenephosphono)carboxylic acid pentaalkyl esters according to claim 1, **characterized in that** compounds of the formula II 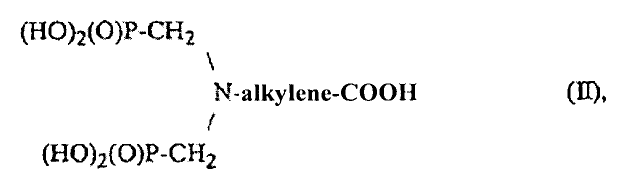 wherein alkylene represents a C₆-C₁₁-alkylene radical or C₇-C₂₀-alkylenearylene radical, which can be linear or branched and can additionally carry halogen atoms, COOR groups, alkoxy groups, bis(dialkoxyphosphorylmethyl)amino groups or aryl radicals as further substituents,
are reacted with orthoesters of the formula III
**(RO)₃C-x** **(III)**
wherein
R represents a C₁-C₄-alkyl radical and
X represents a hydrogen atom, a C₁-C₄-alkyl radical or a phenyl radical, preferably hydrogen,
at a temperature of from 60 °C to 200 °C.

4. Use of the iminobis(methylenephosphono)carboxylic acid pentaalkyl esters according to claim 1 or 2 as solvents or auxiliary substances for the preparation of nanoparticled metal salts.

## Revendications

1. Iminobis(méthylènephosphono)carboxylates de pentaalkyle de la formule I 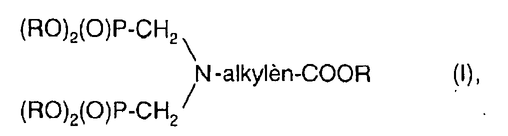 dans laquelle
R représente un reste alkyle en C₁-C₄ et
alkylène représente un reste alkylène en C₆-C₁₁ ou alkylènearylène en C₇-C₂₀, lequel peut être linéaire ou ramifié et peut porter en plus comme autres substituants des atomes d'halogène, des groupes COOR, des groupes alcoxy, des groupes bis(dialcoxyphosphoryl- méthyl)amino ou des restes aryle.

2. Iminobis(méthylènephosphono)carboxylates de pentaalkyle selon la revendication 1, dans lequel alkylène représente un reste alkylène en C₆-C₁₁ et R représente un reste méthyle, éthyle ou isopropyle.

3. Procédé pour la préparation des iminobis(méthylènephosphono)carboxylates de pentaalkyle selon la revendication 1, **caractérisé en ce que** l'on fait réagir des composés de la formule II 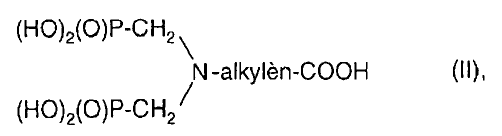 dans laquelle alkylène représente un reste alkylène en C₆-C₁₁ ou alkylènearylène en C₇-C₂₀, lequel peut être linéaire ou ramifié et peut porter en plus comme autres substituants des atomes d'halogène, des groupes COOR, des groupes alcoxy, des groupes bis(dialcoxyphosphorylméthyl)amino ou des restes aryle,
avec des orthoesters de la formule III
(RO)₃C-X (III)
dans laquelle
R représente un reste alkyle en C₁-C₄ et
X représente un atome d'hydrogène, un reste alkyle en C₁-₄ ou un reste phényle, de préférence l'hydrogène,
à une température de 60°C à 200°C.

4. Utilisation des iminobis(méthylènephosphono)carboxylates de pentaalkyle selon la revendication 1 ou 2 comme solvant ou auxiliaire pour la préparation de sels métalliques nanoparticulaires.
